# EUROPÄISCHE PATENTSCHRIFT

(11) **EP 1 134 868 B1**
(45) Veröffentlichungstag und Bekanntmachung des Hinweises auf die Patenterteilung: **21.11.2007**
(21) Anmeldenummer: 00119190.7
(22) Anmeldetag: 05.09.2000
(51) Int. Cl.: H02J 7/00, G05B 13/02, G01R 31/36, A61N 1/378

(54) **Vorrichtung zum Betreiben eines wiederaufladbaren Speichers für elektrische Energie**
Apparatus for operation of a rechargeable electrical energy storage device
Appareil pour faire fonctionner un stockage d'énergie électrique rechargeable

(30) Priorität: 16.03.2000 DE 10012964
(43) Veröffentlichungstag der Anmeldung: 19.09.2001
(73) Patentinhaber: Cochlear Limited, Lane Cove, NSW 2066 (AU)
(72) Erfinder: Schulmayr, Günter, 85579 Neubiberg (DE); Fiedler, Dirk A., Dr., 85737 Ismaning (DE); Leysieffer, Hans, Dr.-Ing. Dipl.-Ing., 82024 Taufkirchen (DE)
(74) Vertreter: Schwan, Gerhard

(56) Entgegenhaltungen:
- US-A- 5 279 292
- US-A- 5 714 866
- US-A- 5 936 385
- US-A- 6 011 379

## Beschreibung

Die vorliegende Erfindung betrifft eine Vorrichtung zum Betreiben eines wiederaufladbaren Speichers für elektrische Energie.

Eine Übersicht über gegenwärtig verwendete Ladestrategien und Ladegeräte für wiederaufladbare elektrochemische Akkumulatoren ist in Halaczek/Radecke, "Batterien und Ladekonzepte", 2. Auflage, 1998, Franzis'-Verlag GmbH zu finden. Üblicherweise wird so vorgegangen, dass in Abhängigkeit von dem Akku-Typ eine bestimmte Ladestrategie gewählt wird, wobei während des Aufladens die Spannung und/oder der Strom des Ladegeräts in Abhängigkeit von der seit Beginn des Ladevorgangs verstrichenen Zeit, der gemessenen aktuellen Akku-Spannung, dem im Ladestromkreis fließenden gemessenen aktuellen Strom und/oder der gemessenen aktuellen Akku-Temperatur gesteuert wird, d.h. es werden für die Steuerung des Ladevorgangs aktuelle, den Akku betreffende Messwerte bzw. daraus abgeleitete Größen (z.B. zeitliche Änderung) verwendet. Bei diesen bekannten Verfahren bzw. Geräten ist nachteilig, dass sich in der Regel der aktuelle Ladezustand sowie der aktuelle qualitative Zustand des Akkus aus den aktuellen Messwerten für Spannung, Strom und Temperatur nicht so genau bestimmen lässt, dass eine hinsichtlich beispielsweise Ladezeit oder Lebensdauer des Akkus optimierte Ladestrategie finden lässt.

Auf den Seiten 246 bis 248 der oben genannten Referenz sind digitale Ladegeräte beschrieben, bei welchen der Ladezustand des Akkus dadurch ermittelt wird, dass bereits während des Entladens der Entladestrom und die Temperatur des Akkus in regelmäßigen Abständen gemessen werden, wobei die Ergebnisse in einem internen abfragbaren E²PROM gespeichert werden

Aus US 5 256 957 ist ein Ladeverfahren bekannt, bei welchem ein aus einem Ersatzschaltbild des Akkus abgeleiteter Kennparameter, der laufend aus dem aktuell gemessenen Ladestrom und der aktuell gemessenen Akku-Spannung bestimmt wird, zur Bestimmung des Abschaltzeitpunkts für den Ladevorgang verwendet wird. Dabei wird der Ladevorgang beendet, sobald die zeitliche Änderung des Kennparameters sich Null annähert. Auch in diesem Fall wird somit die Ladestrategie von aktuellen Messwerten von Akku-Parametern bestimmt.

Aus "Determination of state-of-charge and state-of-health of batteries by fuzzy logic methodology" von Salkind et al., Journal of Power Sources 80, 1999, Seiten 293 bis 300, ist es bekannt, eine Fuzzy-Logik zu verwenden, um den Ladezustand eines elektrochemischen Akkumulators basierend auf frequenzabhängigen Widerstandsmessungen (elektrochemische Impedanzspektroskopie) des Akkumulators vorherzusagen. Das Auffinden der Zugehörigkeitsfunktionen und der Regeln der Fuzzy-Logik erfolgt dabei mittels eines neuronalen Netzes.

In "Predicting failure of secondary batteries" von M. Urquidi-Macdonald et al., Journal of Power Sources 74, 1998, Seiten 87 bis 98 wird vorgeschlagen, das zukünftige Entladeverhalten eines elektrochemischen Akkumators, d.h. den zeitlichen Spannungsverlauf für einen vorgegebenen Ladestromverlauf bei einer bestimmten Temperatur, mittels eines neuronalen Netzes vorherzusagen, wobei das neuronale Netz mit bereits durchgeführten Messungen von Lade- und Entladezyklen (Strom, Spannung, Temperatur) trainiert wird. Dabei wird empfohlen, die für das Training verwendete Datenmenge durch beispielsweise eine Wavelet-Transformation zu verringern.

Es ist Aufgabe der vorliegenden Erfindung, eine Vorrichtung zum Betreiben eines wiederaufladbaren Speichers für elektrische Energie zu schaffen, wobei es möglich sein soll, eine möglichst gute, d.h. beispielsweise eine effiziente und eine möglichst lange Lebensdauer des Speichers ermöglichende, Ladestrategie aufzufinden.

In US-A-5 714 866 sind Verfahren und Vorrichtungen zum schnellen Laden von Batterien für eine elektronische Vorrichtung beschrieben, bei welchen eine Fuzzy-Logic verwendet wird, um durch Anpassung des Ladestroms an den jeweiligen Betriebszustand der zu ladenden Batterie den schnellstmöglichen Ladezyklus auszuwählen.

Diese Aufgabe wird erfindungsgemäß gelöst durch eine Vorrichtung gemäß Anspruch 1. Bei dieser erfindungsgemäßen Lösung ist vorteilhaft, dass durch die Implementierung eines adaptiven Modells des Speichers, welches selbsttätig fortlaufend anhand der im Betrieb erfassten Daten optimiert wird, zu jedem Zeitpunkt eine möglichst optimale Beschreibung, Kenntnis und Vorhersage des Speicherzustands ermöglicht wird und aufgrund dieser genauen und laufend aktualisierten Kenntnisse des Speicherzustands die jeweils momentan günstigste Ladestrategie gewählt werden kann.

Vorzugsweise wird das adaptive Modell mittels neuronaler Netzer und/oder einer Fuzzy-Logik implementiert.

Weitere bevorzugte Ausgestaltungen der Erfindung sind in den Unteransprüchen beschrieben.

Im folgenden wird die Erfindung anhand der beigefügten Zeichnungen beispielhaft näher erläutert, wobei:
- Fig. 1: schematisch das Konzept eines erfindungsgemäßen Ladesystems zeigt;
- Fig. 2: schematisch den Aufbau des Lademoduls eines erfindungsgemäßen Ladesystems zeigt;
- Fig. 3: schematisch den Aufbau eines Steuer- und Vorhersage-Moduls eines erfindungsgemäßen Ladesystems zeigt; und
- Fig. 4: schematisch ein Beispiel für den Datenfluss bei einem adaptiven Modell, wie es bei einem erfindungsgemäßen Ladesystem verwendet wird, zeigt.

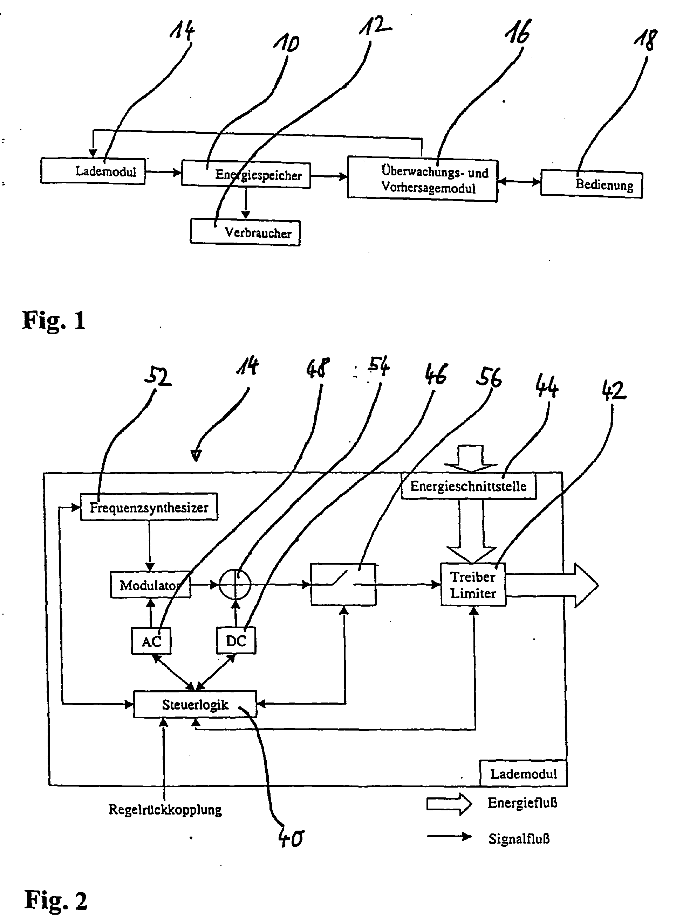

In Fig. 1 ist schematisch die Gesamtkonzeption eines Ladesystems dargestellt, wobei ein wiederaufladbarer Speicher 10 für elektrische Energie einen Verbraucher 12 mit elektrischer Energie versorgt. Ein Lademodul 14 ist vorgesehen, um elektrische Leistung zum Aufladen des Speichers 10 bereitzustellen. Ein kombiniertes Steuer- und Vorhersage-Modul 16 dient dazu, anhand von verfügbaren Daten bezüglich der Historie und Gegenwart des Speichers 10 Prognosen über den gegenwärtigen Zustand und zukünftige Zustände des Speichers 10 zu erstellen, welche verwendet werden, um die aktuelle Ladestrategie für den Speicher 10 auszuwählen und das Lademodul 14 entsprechend zu steuern.

Bei der Inbetriebnahme des Speichers 10 ist das Steuer- und Vorhersage-Modul 16 auf Daten angewiesen, welche beispielsweise bei der Fertigung des Speichers 10 ermittelt wurden und den Zustand des Speichers 10 vor der Inbetriebnahme beschreiben. Im Betrieb sammelt das Modul 16 dann fortlaufend aktuelle Messdaten, d.h. den aus dem Energiespeicher 10 entnommenen bzw. ihm zugeführten Strom, die Spannung des Energiespeichers 10 sowie daraus ableitbare Größen, insbesondere die zeitliche Änderung von Strom und Spannung, wobei diese erfassten Daten in die Prognosen einfließen, um diese zu aktualisieren und zu optimieren. Für die Datenerfassung ist dabei ein Datenerfassungsmodul 22 vorgesehen, welches in Fig. 1 nicht gezeigt ist.

Ein wesentlicher Aspekt besteht darin, dass die Prognosen des Vorhersage-Moduls 16 mittels eines adaptiven Modells erstellt werden, wobei das Modell so ausgebildet ist, dass es fortlaufend anhand der im Betrieb von dem Datenerfassungsmodul erfassten Messdaten optimiert wird. Das adaptive Modell basiert vorzugsweise auf einer sogenannten Neuro-Fuzzy-Logik, wie dies nachfolgend näher erläutert wird. Die Information bezüglich der Betriebs-Historie des Speichers 10 steckt somit in der fortlaufenden Verbesserung des Modells für den speziellen Speicher 10 durch die fortlaufende Adaption über die aktuellen Messwerte, so dass die Betriebs-Historie des Speichers 10 bei der Erstellung von Zustandsprognosen automatisch berücksichtigt wird.

Ferner ist eine in Fig. 1 mit 18 angedeutete Schnittstelle vorgesehen, damit einerseits von dem Vorhersage-Modul 16 ermittelte Prognosen bezüglich des Energiespeichers 10 ausgegeben werden können und andererseits der Benutzer auf das Ladesystem zugreifen kann, um beispielsweise eine Not-Aus-Funktion zu realisieren oder spezielle aktualisierte Daten bezüglich des Energiespeichers 10 einzugeben, damit diese von dem adaptiven Modell berücksichtigt werden können.

Die vorliegende Erfindung ist nicht auf bestimmte Energiespeicher-Typen beschränkt. So können elektrochemische Akkumulatoren, wie beispielsweise NiCd-, NiMH-, Li-Ionen-, Li-, Pb-, AgMH-, Zn/MnO₂-Zellen, Brennstoffzellen, wie beispielsweise AFC (Alkali-Brennstoffzelle), PEM (Polymerelektrolyt-Brennstoffzelle), DMFC (Direktmethanol-Brennstoffzelle), PAFC (Phosphorsäure-Brennstoffzelle), MCFC (Flüssigkarbonat-Brennstoffzelle), SOFC (Feststoffoxid-Brennstoffzelle), passive Bauelemente, wie beispielsweise spezielle Kondensatoren, sowie Kombinationen daraus verwendet werden.

In Fig. 2 ist ein Beispiel für den Aufbau des Lademoduls 14 schematisch dargestellt. Eine Steuerlogik 40 steuert die Ausgabe des Lademoduls 14 an den Energiespeicher 10, indem sie über einen Treiber/Limiter 42, der eine Abschaltmöglichkeit aufweist, den Fluß an elektrischer Leistung steuert, der über eine Energieschnittstelle 44, die leitungsgebunden oder leitungsungebunden sein kann, bereitgestellt wird. Zum Erzeugen der Steuersignale für den Treiber/Limiter sind ein Gleichstromgenerator 46, ein Wechselstromgenerator 48, ein Frequenzsynthesizer 50, ein Modulator 52, ein Addierer 54 sowie ein Schalter 56 vorgesehen. Der Schalter 56 ist beispielsweise für gepulste Signale oder zum Abschalten vorgesehen. Der Gleichstromgenerator 46, der Wechselstromgenerator 48, der Frequenzsynthesizer 50 sowie der Schalter 56 werden direkt von der Steuerlogik 40 angesteuert. Das Lademodul ist für große Flexibiltät ausgelegt und kann DC- und AC-Signale mit konstantem Strom oder konstanter Spannung liefern, die gepulst und/oder moduliert sein können.

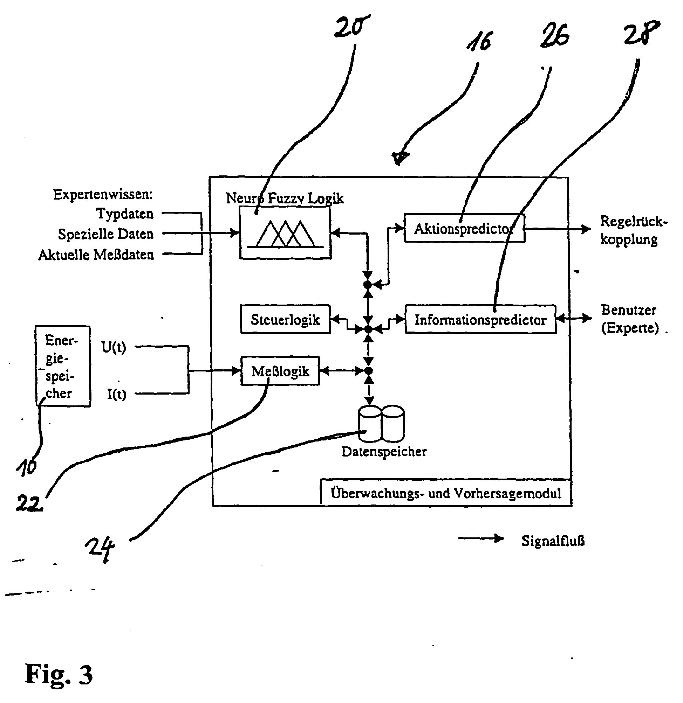

Fig. 3 zeigt schematisch ein Beispiel für den Aufbau des Steuer- und Vorhersage-Moduls 16. Den Kern bildet dabei eine mit 20 bezeichnete Neuro-Fuzzy-Logik, die so gestaltet sein kann, dass das Auffinden der Zugehörigkeitsfunktionen und der Regeln mittels eines oder mehrerer neuronaler Netze erfolgt. Beispiele für die Anwendung einer Neuro-Fuzzy-Logik finden sich in dem eingangs erwähnten Artikel von Salkind et al. Es existieren vielfältige Software-Toolboxen für neuronale Netze und Fuzzy-Logik, z.B. in der Programmiersprache Matlab, wobei viele dieser Toolboxen aus dem Internet bezogen werden können. Darunter befindet sich auch eine Anzahl von Toolboxen, die eine kombinierte Verwendung einer Fuzzy-Logik und neuronaler Netze im Sinne einer Neuro-Fuzzy-Logik erlauben. Insbesondere kann auch eine hybride Neuro-Fuzzy-Logik verwendet werden, die beispielsweise zweistufig ausgebildet sein kann, wobei die Eingangsdaten beispielsweise in zwei unterschiedliche Neuro-Fuzzy-Logiken eingespeist werden und die Ausgangswerte derselben in eine dritte Neuro-Fuzzy-Logik als Eingangswerte eingespeist werden, wobei deren Ausgangswerte letztlich das gewünschte Ergebnis liefern. Ein Beispiel für ein Hybridsystem ist in K. M. Bossley, Neurofuzzy Modelling Approaches in System Identification, Ph. D. Thesis. University of Southampton, Department of Electronics and Computer Science, 1997 zu finden.

Eine wesentliche Aufgabe des Vorhersage-Moduls 16 besteht darin, aus bekannten Daten für den Energiespeicher 10, welche die Betriebsgeschichte desselben wiedergeben, Prognosen bezüglich des gegenwärtigen Speicherzustands sowie bezüglich der Entwicklung des Speicherzustands in der Zukunft zu gewinnen. Dabei soll aus den vorhandenen Datensätzen eine möglichst zutreffende Prognose geleistet werden. Hierbei ist zu berücksichtigen, dass beispielsweise bei Akkumulatoren im Lauf des Betriebs Veränderungen der Eigenschaften des Akkumulators eintreten, die sich nur langsam entwickeln und in sehr kleinen Größenordnungen bewegen, wie beispielsweise Korrosionsreaktionen oder langsame Veränderungen der mechanischen und geometrischen Eigenschaften. Die üblicherweise verwendeten einfachen analytische Akkumulator-Modelle sind nicht in der Lage, solche Veränderungen der Akkumulator-Eigenschaften hinreichend genau zu modellieren. Insbesondere sind sie nicht in der Lage, aus den leicht zugänglichen Messgrößen, d.h. Spannungs-, Strom- und Temperaturverlauf, die Veränderungen der internen Akkumulator-Eigenschaften analytisch nachzubilden. Aus diesem Grund wird vorliegend auf eine solche analytische Beschreibung verzichtet und statt dessen versucht, mittels eines selbstlernenden Modells direkt aus möglichst vielen zur Verfügung stehenden Daten bezüglich der Geschichte des Energiespeichers eine Prognose in die Zukunft mit hinreichender Genauigkeit zu erzielen, um beispielsweise einerseits die Lebensdauer des Energiespeichers vorherzusagen oder andererseits beispielsweise die optimale Ladestrategie auszuwählen, welche beispielsweise zu einem möglichst schnellen Laden oder zu einem möglichst schonenden Laden oder einem möglichst energieeffizienten Laden des Energiespeichers führt. Unter Berücksichtigung der langfristigen Lebensdauer-Prognose kann dabei beispielsweise die Ladestrategie so gewählt werden, dass die Lebensdauer-Erwartung des Energiespeichers optimiert wird.

Vor Inbetriebnahme eines speziellen Energiespeichers 10 stehen noch keine Daten zur Verfügung, die im Betrieb dieses speziellen Energiespeichers 10 gemessen wurden. Aus diesem Grund kann die Neuro-Fuzzy-Logik 20 zu diesem Zeitpunkt nur Daten verwenden, die den Zustand des Speichers 10 vor Inbetriebnahme beschreiben. Dies können einerseits Typ-Daten, d.h. Daten, die spezifisch für den Typ des Energiespeichers 10 sind, sein oder für den speziellen Energiespeicher 10 spezifische Daten, wie beispielsweise Daten, die bei der Fertigung des Energiespeichers 10 ermittelt wurden. Dabei handelt es sich um physikalische oder chemische Daten, beispielsweise die Masse, Abmessungen bzw. geometrische Kenngrößen, die Porosität und Korngrößen einschließlich deren räumlichen Verteilungen sowie elektrische Kenndaten wie die frequenzabhängige Impedanz des Speichers 10. Zusätzlich wird eine Startkonfiguration der Neuro-Fuzzy-Logik 20 voreingestellt. Sobald der Betrieb des Energiespeichers 10 aufgenommen wurde, kann das Vorhersage-Modul 16 mittels eines Messmoduls 22 aktuelle Messdaten, beispielsweise für den Strom von oder zu dem Speicher 10 sowie die an den Speicheranschlüssen anliegende Spannung, jeweils in Abhängigkeit von der Zeit, gewinnen, welche als Datensätze zur späteren Verwendung in einem Datenspeicher 24 abgespeichert werden. Anhand der so aufgezeichneten Betriebsgeschichte des Speichers 10 wird die Neuro-Fuzzy-Logik 20 einem regelmäßigen Nachtraining unterzogen, um die Vorhersage-Genauigkeit für den speziellen Energiespeicher 10 laufend zu verbessern, d.h. das Modell des Speichers 10 wird mit zunehmender Betriebsdauer genauer.

Ein wesentlicher Aspekt der Erfindung besteht darin, dass auf diese Weise nicht nur aktuelle Messwerte für Prognosen bezüglich des Speicherzustands verwendet werden, sondern möglichst die gesamte Betriebsgeschichte des Speichers 10. Dies erlaubt erst langfristige Prognosen in die Zukunft, beispielsweise bezüglich der Lebensdauer des Speichers 10.

Zweckmäßigerweise werden die gewonnenen Messdatensätze vor der Verarbeitung durch die Neuro-Fuzzy-Logik 20 einer Aufbereitung unterzogen. Dabei kann beispielsweise eine Wavelet-Transformation verwendet werden, um Rauschen zu eliminieren und ohne wesentlichen Genauigkeitsverlust eine Datenkompression vorzunehmen. Es können jedoch auch statistische Verfahren verwendet werden.

Ausgangsseitig bedient die Neuro-Fuzzy-Logik 20 ein Aktionsprediktor-Modul 26 sowie ein Informationsprediktor-Modul 28. Das Aktionsprediktor-Modul 26 dient dazu, die Prognosen der Neuro-Fuzzy-Logik 20 in eine kurz- und langfristige Steuerung des Lademoduls 14 umzusetzen, wobei beispielsweise eine solche Ladestrategie gewählt werden kann, dass die Lebenserwartung des Energiespeichers 10 optimiert wird. Das Informationsprediktor-Modul 28 dient als Schnittstelle 18 mit dem Benutzer, um beispielsweise die aktuelle Prognose für die Lebenserwartung des Energiespeichers 10 und Hilfestellung für dessen Pflege oder die bis zum nächsten erforderlichen Ladevorgang noch verbleibende Zeit bei der momentanen Belastung durch den Verbraucher 12 auszugeben. Ferner kann beispielsweise ausgegeben werden, wie lange der Ladevorgang noch dauert. Andererseits kann der Benutzer über diese Schnittstelle auch die Steuerung des Lademoduls 14 beeinflussen, beispielsweise indem er ein Not-Aus-Signal eingibt. Ferner kann der Benutzer auch beispielsweise aktualisiertes Expertenwissen bezüglich des verwendeten Energiespeicher-Typs eingeben, was besonders von Interesse ist, wenn die Lebensdauer des Energiespeichers 10 sich über viele Jahre erstreckt.

Bei dem Energiespeicher 10 handelt es sich vorzugsweise um den Energieversorgungsteil eines Implantats in den menschlichen Körper, beispielsweise ein Hörsystem. Hierbei erfolgt das Laden des Energiespeichers durch transkutanes Übermitteln von elektrischer Energie, welche von einem Energie-Sendeteil des Lademoduls 14 an ein entsprechendes Energie-Empfangsteil des Energiespeichers 10 ausgesendet wird. Bei einem solchen System ist es besonders wichtig, einerseits den aktuellen Ladezustand des Energiespeichers zu kennen und andererseits auch eine zuverlässige Prognose über dessen Gesamtlebensdauer zur Verfügung zu haben.

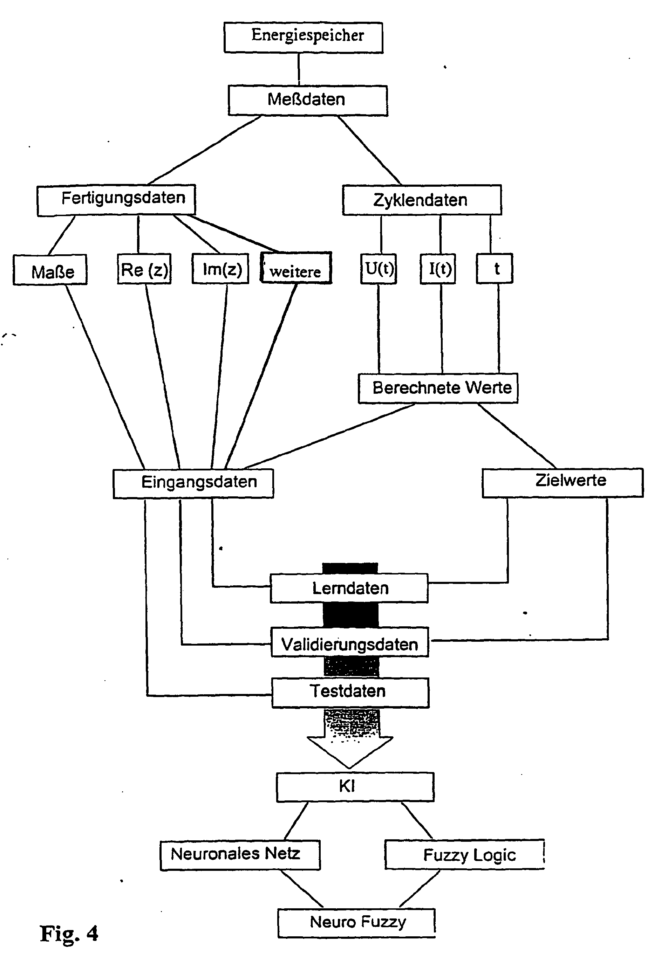

Fig. 4 stellt den Datenfluss der Neuro-Fuzzy-Logik 20 des Vorhersage-Moduls 16 schematisch dar. Für das Trainieren der Neuro-Fuzzy-Logik 20 werden die zur Verfügung stehenden Daten in Lerndaten, Validierungsdaten und Testdaten unterteilt. In der ersten Stufe werden die Lerndaten in die Neuro-Fuzzy-Logik eingespeist und die Parameter derselben so lange verändert, bis die entsprechenden zu den Eingangsdaten zugehörigen Zielwerte möglichst gut reproduziert werden. Anhand der Validierungsdaten kann dann eine Überprüfung des Lernerfolgs durchgeführt werden. Das Lernen und Validieren kann jedoch auch gleichzeitig erfolgen. Anhand der Testdaten schließlich kann eine endgültige Überprüfung des Modells vorzugenommen werden.

Das Ermitteln der initialen Parameter der Neuro-Fuzzy-Logik kann auch extern erfolgen und dann in die Laderegelung übertragen werden.

## Patentansprüche

1. Vorrichtung zum Betreiben eines wiederaufladbaren Speichers (10) für elektrische Energie, mit:
einem Lademodul (14) zum Bereitstellen von elektrischer Leistung zum Aufladen des Speichers;
einem Datenerfassungsmodul (22), das im Betrieb fortlaufend aktuelle Betriebsparameter (U(t), I(t)) des Speichers erfasst;
einem Vorhersagemodul (16), in welchem ein adaptives Modell (20) implementiert ist, das aus den Zustand des Speichers vor der Inbetriebnahme beschreibenden Daten und
den im Betrieb erfassten Daten sowie optional aus weiterem Expertenwissen Prognosen über zukünftige Zustände des Speichers ableitet, wobei das Modell so ausgebildet ist, dass es selbsttätig fortlaufend anhand der im Betrieb erfassten Daten sowie optional anhand von weiterem Expertenwissen optimierbar ist;
einem Datenspeicher (24); und
einem Steuermodul (26) zum Steuern des Lademoduls, wobei das Steuermodul so ausgebildet ist, dass es die aktuelle Ladestrategie für den Speicher in Abhängigkeit von den aus dem Modell abgeleiteten Prognosen und den aktuell erfassten Betriebsparametern des Speichers wählt,
**dadurch gekennzeichnet, dass**
der Speicher (10) einen Energieempfangsteil aufweist und einen Teil eines implantierbaren Hörsystems bildet, wobei das Lademodul (14) einen Energiesender aufweist, um den Speicher durch transkutanes Übermitteln von elektrischer Energie an das Empfangsteil aufzuladen; und
das Vorhersagemodul zur Prognostizierung der Lebensdauer des Speichers (10) ausgelegt ist und die Ladestrategie so gewählt wird, dass die von dem Vorhersagemodul prognostizierte Lebensdauer des Speichers optimiert wird.

2. Vorrichtung nach Anspruch 1, **dadurch gekennzeichnet, dass** das adaptive Modell (20) auf einem oder mehreren neuronalen Netzen und/oder einer Fuzzy-Logik basiert.

3. Vorrichtung nach Anspruch 2, **dadurch gekennzeichnet, dass** das adaptive Modell (20) auf einer Neuro-Fuzzy-Logik basiert, bei welcher das Auffinden der Zugehörigkeitsfunktionen und der Regeln mittels eines oder mehrerer neuronaler Netze erfolgt und aus Daten und Expertenwissen erlernt wird.

4. Vorrichtung nach Anspruch 3, **dadurch gekennzeichnet, dass** die Neuro-Fuzzy-Lögik (20) mehrstufig aufgebaut ist.

5. Vorrichtung nach Anspruch 3 oder 4, **dadurch gekennzeichnet, dass** die Neuro-Fuzzy-Logik (20) vor Inbetriebnahme des Speichers (10) anhand der den Zustand des Speichers bei Inbetriebnahme beschreibenden Daten initialisiert und anhand der im Betrieb erfassten Daten sowie anhand von aktualisiertem Expertenwissen nachtrainiert wird.

6. Vorrichtung nach einem der vorhergehenden Ansprüche, **dadurch gekennzeichnet, dass** es sich bei den den Zustand des Speichers (10) bei Inbetriebnahme beschreibenden Daten um Fertigungsdaten des Speichers und/oder typspezifische Daten und/oder sonstige vorhandene Erfahrungswerte bzgl. des Speichers handelt.

7. Vorrichtung nach Anspruch 6, **dadurch gekennzeichnet, dass** es sich bei den Fertigungsdaten des Speichers (10) beispielsweise um die Masse, die Abmessungen bzw. geometrische Kenngrössen, die Porosität und Korngrößen einschliesslich deren räumlichen Verteilungen sowie elektrische Kenndaten wie die frequenzabhängige Impedanz des Speichers handelt.

8. Vorrichtung nach einem der vorhergehenden Ansprüche, **dadurch gekennzeichnet, dass** eine Kommunikationsschnittstelle (18, 28) mit dem Benutzer vorgesehen ist.

9. Vorrichtung nach Anspruch 8, **dadurch gekennzeichnet, dass** über die Kormnunikationsschnittstelle (18, 28) von dem Benutzer Informationen zur Berücksichtigung durch das Vorhersagemodul (16) eingegeben werden können.

10. Vorrichtung nach Anspruch 8 oder 9, **dadurch gekennzeichnet, dass** über die Kommunikationsschnittstelle (18, 28) von dem Vorhersagemodul (16) ermittelte Prognosen, beispielsweise hinsichtlich der noch bis zum nächsten erforderlichen Ladevorgang verbleibenden Zeit oder der Lebensdauer des Speichers (10), Ladeanweisungen und/oder andere Systeminformationen ausgegeben werden.

11. Vorrichtung nach einem der vorhergehenden Ansprüche, **dadurch gekennzeichnet, dass** die von dem Vorhersagemodul (16) für das Modell (20) verwendeten Daten aufbereitet werden.

12. Vorrichtung nach einem der vorhergehenden Ansprüche, **dadurch gekennzeichnet, dass** die von dem Vorhersagemodul (16) für das Modell (22) verwendeten Daten einer Wavelet-Transformation unterzogen werden, um die Datenmenge zu reduzieren.

13. Vorrichtung nach einem der vorhergehenden Ansprüche, **dadurch gekennzeichnet, dass** es sich bei den erfassten Betriebsparametern des Speichers (10) um die aktuelle Spannung (U(t)) des Speichers (10) und den aktuellen Strom (I(t)) im Speicherkreis und den Messzeitpunkt (t) handelt.

14. Vorrichtung nach einem der vorhergehenden Ansprüche, **dadurch gekennzeichnet, dass** es sich bei dem Speicher (10) um einen NiCd-, Ni-Metallhydrid-, Li- oder Li-Ionen-Akkumulator handelt.

## Claims

1. Device for operating a rechargeable storage (10) for electrical energy, comprising:
a charging module (14) for making available electric power to charge the storage;
a data acquisition module (22) which during operation continually acquires instantaneous operating parameters (U(t), (I(t)) of the storage;
a prediction module (16) in which an adaptive model (20) is implemented which, from the data describing the state of the storage before start-up and the data acquired in operation and optionally from other expert knowledge, derives predictions about future states of the storage, the model being designed such that it can be automatically optimized continuously using the data acquired in operation and optionally using further expert knowledge;
a data memory (24), and
a control module (26) for control of the charging module, the control module being designed such that it chooses the instantaneous charging strategy for the storage depending on the predictions derived from the model and on the currently acquired operating parameters of the storage;
**characterized in that**
the storage (10) has an energy receiving part and forms part of an implantable hearing system, the charging module (14) having an energy transmitter to charge the storage by transcutaneous transmission of electrical energy to the receiving part; and
the prediction module is designed for predicting the lifetime of the storage (10) and the charging strategy is chosen such that the lifetime of the storage predicted by the prediction module is optimized.

2. Device as claimed in claim 1, **characterized in that** the adaptive model (20) is based on one or more neural networks and/or a fuzzy logic.

3. Device as claimed in claim 2, **characterized in that** the adaptive model (20) is based on a neuro-fuzzy logic in which finding the membership function and the rules is done using one or more neural networks and is learned from data and expert knowledge.

4. Device as claimed in claim 3, **characterized in that** the neuro-fuzzy logic (20) is built in several stages.

5. Device as claimed in claim 3 or 4, **characterized in that** the neuro-fuzzy logic (20) before start-up of the storage (10) is initialized using the data which describe the state of the storage at start-up and is retrained using the data acquired in operation and using updated expert knowledge.

6. Device as claimed in any one of the preceding claims, **characterized in that** the data which describe the state of the storage (10) at start-up are production data of the storage and/or type-specific data and/or other empirical values relating to the storage.

7. Device as claimed in claim 6, **characterized in that** the production data of the storage (10) are for example the mass, the dimensions or geometrical characteristics, the porosity and grain sizes including their three-dimensional distributions as well as electrical characteristic data, such as the frequency-dependent impedance of the storage.

8. Device as claimed in any one of the preceding claims, **characterized in that** there is provided a communication interface (18, 28) with the user.

9. Device as claimed in claim 8, **characterized in that** information can be input by the user via the communication interface (18, 28) for consideration by the prediction module (16).

10. Device as claimed in claim 8 or 9, **characterized in that** predictions determined by the prediction module (16), for example regarding the time remaining until the next required charging process or the lifetime of the storage (10), charging instructions, and/or other system information are output via the communication interface (18, 28).

11. Device as claimed in any one of the preceding claims, **characterized in that** the data used by the prediction module (16) for the model (20) are preprocessed.

12. Device as claimed in any one of the preceding claims, **characterized in that** the data used by the prediction module (16) for the model (20) are subjected to a wavelet transform in order to reduce the quantity of data.

13. Device as claimed in any one of the preceding claims, **characterized in that** the acquired operating parameters of the storage (10) are the instantaneous voltage (U(t)) of the storage (10) and the instantaneous current (I(t)) in the storage circuit and the time of measurement (t).

14. Device as claimed in any one of the preceding claims, **characterized in that** the storage (10) is a NiCd, Ni metal hydride, Li or Li ion battery.

## Revendications

1. Dispositif pour exploiter un accumulateur (10) rechargeable pour de l'énergie électrique, comprenant :
un module de chargement (14) destiné à fournir la puissance électrique pour le rechargement de l' accumulateur ;
un module de saisie de données (22), qui comprend des paramètres de service (U(t), I(t)), constamment actualisés pendant le service, de l'accumulateur ;
un module de prévision (16) dans lequel est mis en place un modèle (20) adaptatif qui déduit, à partir des données décrivant l'état de l'accumulateur avant la mise en service et des données saisies pendant le service ainsi qu'en option d'autres connaissances d'expert, des prévisions sur les états à venir de l'accumulateur, le modèle étant conçu de telle sorte qu'il peut être optimisé automatiquement de façon continue à l'aide des données saisies pendant le service et en option à l'aide d'autres connaissances d'expert ;
une mémoire de données (24) ; et
un module de commande (26) pour la commande du module de chargement, le module de commande étant conçu de telle sorte qu'il choisit la stratégie de chargement actuelle pour l'accumulateur en fonction des prévisions déduites du modèle et des paramètres de service actuellement saisis de l'accumulateur,
**caractérisé en ce que**:
l'accumulateur (10) présente une partie de réception d'énergie et forme une partie d'un système auditif implantable, le module de chargement (14) présentant un émetteur d'énergie afin de recharger l'accumulateur par transmission transcutanée de l'énergie électrique à la partie réceptrice ; et
le module de prévision est conçu pour prévoir une durée de vie de l'accumulateur (10) et la stratégie de chargement est choisie de telle sorte que la durée de vie, prévue par le modèle de prévision, de l'accumulateur est optimisée.

2. Dispositif selon la revendication 1, **caractérisé en ce que** le modèle (20) adaptatif est basé sur un ou plusieurs réseaux neuronaux et/ou une logique floue.

3. Dispositif selon la revendication 2, **caractérisé en ce que** le modèle (20) adaptatif est basé sur une logique neuro-floue, avec laquelle la recherche des fonctions d'appartenance et des règles s'effectue au moyen d'un ou de plusieurs réseaux neuronaux, et est acquise à partir de données et de connaissances d'expert.

4. Dispositif selon la revendication 3, **caractérisé en ce que** la logique neuro-floue (20) est conçue avec plusieurs niveaux.

5. Dispositif selon la revendication 3 ou 4, **caractérisé en ce que** la logique neuro-floue (20) est initialisée avant la mise en service de l'accumulateur (10) à l'aide des données décrivant l'état de l'accumulateur en cas de mise en service et fait l'objet d'un entraînement complémentaire à l'aide des données saisies pendant le service ainsi qu' à l'aide de connaissances d'expert actualisées.

6. Dispositif selon l'une quelconque des revendications précédentes, **caractérisé en ce que**, en ce qui concerne les données décrivant l'état de l'accumulateur (10) en cas de mise en service, il s'agit de données de fabrication de l'accumulateur et/ou de données spécifiques au modèle et/ou d'autres valeurs empiriques existantes en ce qui concerne l'accumulateur.

7. Dispositif selon la revendication 6, **caractérisé en ce que**, en ce qui concerne les données de fabrication de l'accumulateur (10), il s'agit par exemple de la masse, des dimensions ou de paramètres géométriques, de la porosité et des grosseurs de grain, y compris leurs répartitions dans l'espace ainsi que de paramètres électriques tels que l'impédance, dépendante de la fréquence, de l'accumulateur.

8. Dispositif selon l'une quelconque des revendications précédentes, **caractérisé en ce qu'**une interface de communication (18, 28) est prévue avec l'utilisateur.

9. Dispositif selon la revendication 8, **caractérisé en ce que** des informations pour la prise en compte par le module de prévision (16) peuvent être entrées par l'utilisateur au moyen de l'interface de communication (18, 2 8).

10. Dispositif selon la revendication 8 ou 9, **caractérisé en ce que** des prévisions déterminées par le module de prévision (16) par l'intermédiaire de l'interface de communication (18, 28), par exemple en ce qui concerne le temps restant encore jusqu'à la prochaine opération de chargement nécessaire ou en ce qui concerne la durée de vie de l'accumulateur (10), des directives de chargement et/ou d'autres informations sur le système sont sorties.

11. Dispositif selon l'une quelconque des revendications précédentes, **caractérisé en ce que** les données utilisées par le module de prévision (16) pour le modèle (20) sont préparées.

12. Dispositif selon l'une quelconque des revendications précédentes, **caractérisé en ce que** les données utilisées par le module de prévision (16) pour le modèle (20) sont soumises à une transformation des ondelettes, afin de réduire la quantité de données.

13. Dispositif selon l'une quelconque des revendications précédentes, **caractérisé en ce que**, en ce qui concerne les paramètres de service saisis de l'accumulateur (10), il s'agit de la tension (U(t)) actuelle de l'accumulateur (10) et du courant (I(t)) actuel dans le circuit d'accumulateur et de l'instant de mesure (t).

14. Dispositif selon l'une quelconque des revendications précédentes, **caractérisé en ce que**, en ce qui concerne l'accumulateur (10), il s'agit d'un accumulateur NiCd, d'un accumulateur à hydrure métallique-Ni, d'un accumulateur au lithium ou d'un accumulateur à ions de lithium.
